# FASCICULE DE BREVET EUROPEEN

(11) **EP 0 402 551 B1**
(45) Date de publication et mention de la délivrance du brevet: **12.01.1994**
(21) Numéro de dépôt: 89401700.3
(22) Date de dépôt: 16.06.1989
(51) Int. Cl.: B62B 3/10

(54) **Chariot d'achat de type emboîtable, comportant un plateau escamotable sous sa corbeille de transport**
Stapelbarer Einkaufswagen mit einer einziehbaren Ablage unter dem Transportkorb
Nestable shopping trolley with a retractable tray under the transport basket

(43) Date de publication de la demande: 19.12.1990
(73) Titulaire: ATELIERS REUNIS CADDIE, F-67300 Schiltigheim (FR)
(72) Inventeur: Le Marchand, Alain, F-67116 Reichstett (FR); Bailly, Daniel, F-67800 Bischheim (FR)
(74) Mandataire: Boutin, Antoine

(56) Documents cités:
- DE-A- 3 444 969
- DE-U- 8 500 639
- DE-U- 8 508 238
- US-A- 2 890 058

## Description

La présente invention concerne les chariots d'achat mis à la disposition de la clientèle dans les magasins en libre-service, et plus précisément les chariots d'achat de type emboîtable.

Les chariots de ce genre comportent une corbeille de transport destinée à recevoir les objets achetés par l'utilisateur, laquelle se trouve située à une certaine hauteur par rapport au sol. A son extrémité arrière, cette corbeille est fermée par un volet monté librement pivotant à l'endroit de son bord supérieur. Ceci permet l'engagement de l'extrémité avant de la corbeille d'un autre chariot identique lors de l'emboîtement de ces chariots les uns à l'intérieur des autres lorsqu'ils se trouvent en attente d'utilisation.

Pour permettre le transport d'objets volumineux, tels que des caisses ou cartons contenant des bouteilles de bière ou autres boissons, certains des chariots de ce genre sont pourvus d'un support supplémentaire susceptible d'être escamoté sous la corbeille de transport lorsqu'il n'est pas utilisé.

Ainsi, les brevets US 2.890.058 et 2.903.269, de même que le DE 34.44.969, décrivent des chariots dans lesquels il est prévu un support supplémentaire constitué par un plateau monté coulissant dans le sens longitudinal entre une position d'escamotage sous la corbeille de transport et une position d'utilisation dans laquelle il est dégagé, tout au moins en partie, en arrière de celle-ci. Différents modes de montage sont alors prévus pour permettre le coulissement de ce plateau escamotable sur le châssis inférieur du chariot correspondant.

Ainsi, la figure 2 du DE 34.44.969 représente un chariot dont le châssis inférieur porte deux glissières inclinées de guidage disposées sur l'un et l'autre côtés. Ces glissières assurent le guidage de galets ou similaires portés latéralement par l'extrémité avant du plateau escamotable. Par ailleurs, en arrière de ces glissières il est prévu une traverse susceptible d'assurer le soutien du plateau escamotable dans une position sensiblement horizontale lorsqu'il est déployé en arrière du chariot.

Cependant un tel agencement présente un certain nombre d'inconvénients. Le premier d'entre eux réside dans le fait que l'adjonction des glissières latérales de guidage complique la structure du châssis inférieur et augmente par là même le prix de revient de l'ensemble. Par ailleurs, lorsque le plateau mobile est déployé en arrière et qu'il n'a pas encore reçu une charge à transporter, il existe le risque d'un retour intempestif de ce plateau dans sa position d'escamotage sous l'effet du moindre choc. Ceci constitue évidemment un inconvénient gênant si ce fait se produit au moment où l'utilisateur est sur le point de placer une charge sur ce plateau.

C'est pourquoi la présente invention a pour but de réaliser un chariot du même type général mais qui est conçu de façon à éviter ces inconvénients.

A cet effet, ce chariot est caractérisé par les caractéristiques indiquées dans la seconde partie de la revendication 1.

Ainsi, compte tenu de la convergence l'un vers l'autre des éléments formant les glissières latérales de guidage, la partie avant du plateau mobile est soumise à une légère compression élastique dans le sens transversal lorsque ce plateau est repoussé dans sa position d'escamotage. En conséquence, un retour intempestif de celui-ci dans cette position, sous l'effet d'un simple choc, est rendu radicalement impossible. En effet, un tel retour ne peut être obtenu qu'en exerçant volontairement une certaine poussée sur l'extrémité arrière du plateau mobile. Par ailleurs, la structure du châssis du chariot se trouve grandement simplifiée du fait que les glissières latérales de guidage sont constituées par des éléments formant en même temps les jambes avant d'appui du chariot.

Cependant d'autres avantages et particularités du chariot selon l'invention apparaîtront au cours de la description suivante d'un exemple de réalisation possible de celui-ci.

Cette description est donnée en référence au dessin annexé à simple titre indicatif, et sur lequel :
La figure 1 est une vue en perspective d'un chariot selon l'invention, celui-ci étant vu depuis l'arrière.
La figure 2 est une vue partielle en élévation de côté du plateau escamotable représenté dans sa position de déploiement en arrière.
La figure 3 est une vue similaire représentant ce même plateau en position d'escamotage sous la corbeille du chariot.

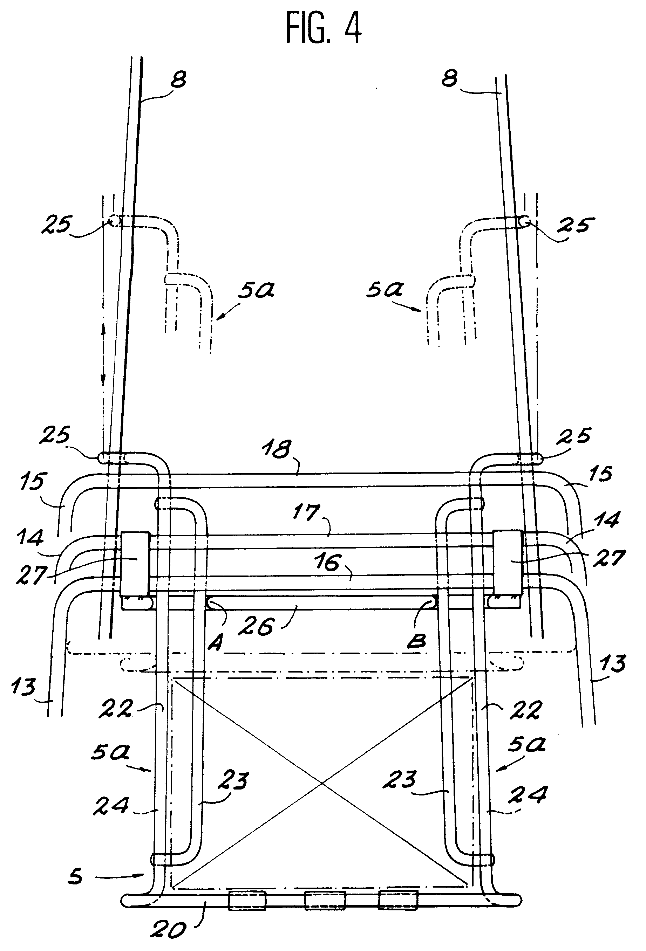

La figure 4 est une vue schématique en plan de dessus de ce plateau escamotable représenté en traits pleins dans sa position de déploiement et partiellement en traits mixtes dans sa position d'escamotage.
La figure 5 est une vue partielle en élévation de l'extrémité arrière de ce même plateau lorsqu'il se trouve dans sa position d'escamotage.
La figure 6 est une vue en perspective du plateau escamotable représenté isolément.

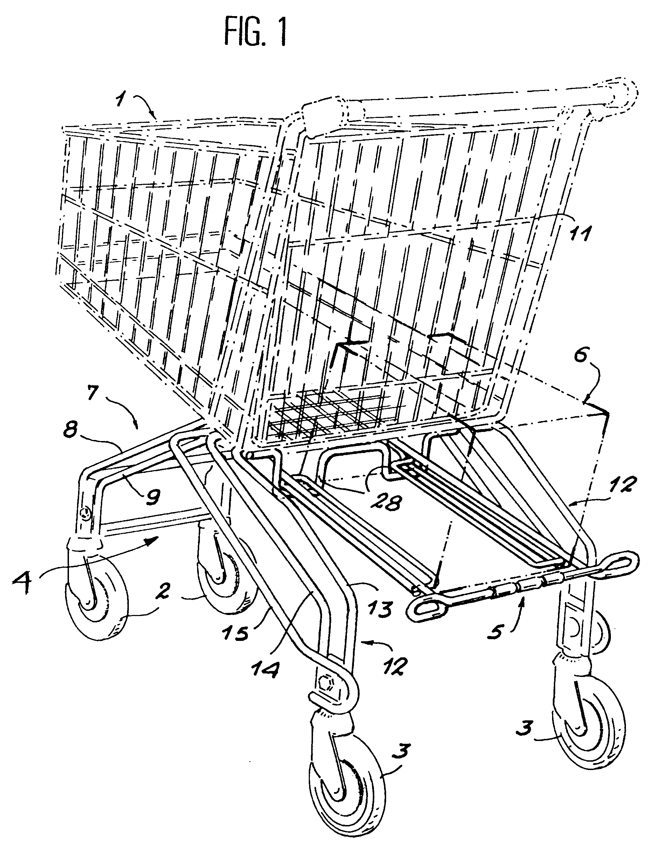

Le chariot représenté à la figure 1 comporte une corbeille de transport 1 disposée à une certaine hauteur au-dessus des roues avant 2 et arrière 3. Cette corbeille est fixée sur un châssis inférieur désigné par la référence générale 4. Au-dessous de cette corbeille, il est prévu un plateau mobile 5 susceptible d'être déployé en arrière de celle-ci pour constituer un support supplémentaire destiné à recevoir une charge relativement volumineuse, par exemple une caisse 6 en carton ou similaire.

Dans sa partie avant, le châssis 4 comporte deux éléments inclinés 7, disposés sur l'un et l'autre côtés, et qui constituent à la fois deux jambes avant d'appui et des glissières latérales de guidage pour l'extrémité avant du plateau mobile 5. Chacun de ces éléments 7 est constitué par deux fils métalliques parallèles 8 et 9 qui sont superposés dans un même plan vertical. A leurs extrémités supérieures, ces deux fils sont fixés contre la partie arrière du fond 10 de la corbeille 1. Ces deux fils sont inclinés vers le bas en direction de l'avant et leurs extrémités avant portent les roues avant 2 du chariot. Pour permettre l'emboîtement de ce chariot dans l'extrémité arrière d'un autre chariot identique, les deux jambes avant 7 présentent un écartement plus faible à l'avant qu'à l'arrière. Dans le même but, la paroi arrière de la corbeille 1 est constituée par un volet 11 monté librement pivotant autour de son bord supérieur, ce qui permet l'engagement de la partie avant de la corbeille d'un autre chariot à l'intérieur de celle du chariot considéré.

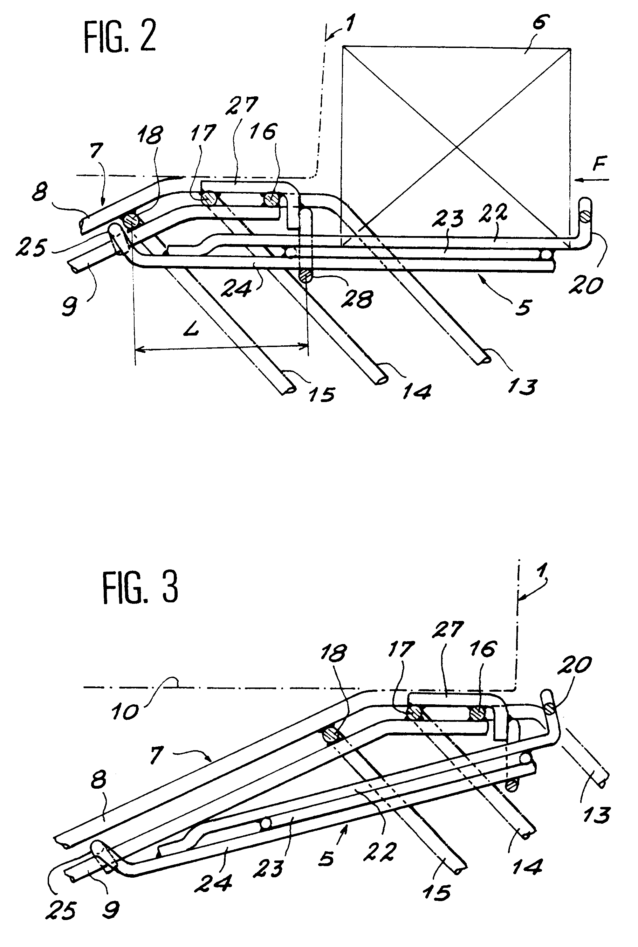

Quant à la partie arrière du châssis 4, elle est constituée par deux jambes latérales d'appui 12 inclinées en sens inverse de l'inclinaison des jambes avant 7. Les extrémités supérieures de ces jambes d'appui 12 sont fixées contre la partie arrière du fond 10 de la corbeille 1 et leurs extrémités inférieures portent les roues arrière 3. Dans l'exemple représenté, ces deux jambes d'appui sont constituées par les branches latérales de trois arceaux 13, 14 et 15 en fil métallique. La branche médiane 16, 17 et 18 de chacun de ces arceaux s'étend horizontalement sous le fond de la corbeille 1 et chacune de ces branches médianes, ou tout au moins certaines d'entre elles, sont engagées entre les deux fils superposés 8 et 9 constituant les jambes avant 7 du socle 4 (voir figures 2 et 3).

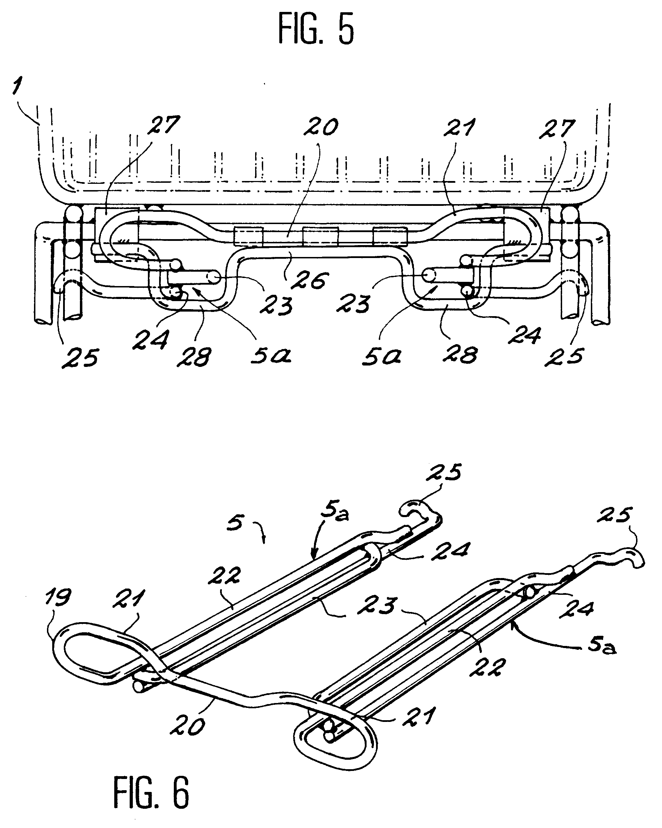

Comme il ressort clairement de la figure 6, le plateau mobile 5 présente une structure en U dont l'ouverture est tournée vers l'avant. Cette structure est réalisée en fils métalliques élastiques. Elle comprend un premier fil métallique 19 coudé en forme générale de U dont la branche médiane 20 constitue le bord arrière du plateau 5. A ses extrémités, cette branche 20 comporte des boucles 21 faisant saillie au-dessus du plan général du plateau 5 pour constituer un rebord de retenue pour la caisse 6 ou autre charge placée sur le plateau lors de son utilisation.

Quant aux branches latérales 22 du fil 19, elles constituent les branches correspondantes 5a de la structure en U du plateau 5. Chacune de ces branches est complétée par deux autres fils métalliques parallèles 23 et 24, ces différents fils étant soudés entre eux à leurs extrémités. Cependant les extrémités des fils 24 se prolongent au-delà des autres et se terminent par une partie coudée formant un crochet 25.

Ces deux crochets, qui se trouvent donc situés à l'endroit des coins avant du plateau 5, sont engagés dans les glissières de guidage constituées par l'intervalle existant entre les deux fils superposés 8 et 9 de chaque jambe avant 7 du châssis. Il convient de noter que chaque crochet 25 est engagé autour du fil inférieur 9 correspondant. Ceci assure donc le guidage de l'extrémité avant du plateau 5 par les glissières latérales constituées par les jambes avant 7 du châssis.

En position d'escamotage du plateau 5, l'extrémité arrière de celui-ci repose sur un élément horizontal de soutien prévu au-dessous de l'extrémité arrière de la corbeille 1. Cet élément de soutien est constitué par une traverse 26 en fil métallique dont les extrémités sont fixées sur deux pattes 27 portées par les branches médianes 16 et 17 des deux arceaux arrière 13 et 14 du socle. Cette traverse 26 comporte deux parties 28 coudées en U dans un plan vertical pour former des brides dans chacune desquelles est engagée la branche latérale correspondante 5a du plateau mobile 5 qui peut y coulisser (voir figure 5). Ainsi, ces deux brides 28 forment à la fois des éléments de soutien pour le plateau 5 et des organes supplémentaires de guidage lors des déplacements de celui-ci.

Comme représenté sur la figure 2, la branche médiane 18 de l'arceau arrière 15 du châssis constitue une butée pour les crochets 25 du plateau mobile 5 à l'extrémité supérieure des glissières latérales de guidage 7. Cette butée est située en un point tel que le plateau 5 se trouve alors arrêté dans une position pour laquelle il se trouve disposé sensiblement à l'horizontale. Les branches latérales 5a de ce plateau prennent alors appui sur les brides 28 formées par la traverse arrière 26. La stabilité de ce plateau est assurée par le fait que cette traverse est située en arrière de la butée 18 à une distance L de celle-ci (voir figure 2).

En raison de la structure particulière du plateau mobile 5, la partie avant de celui-ci présente une possibilité de déformation élastique dans le sens transversal. Ceci est indispensable dans le cas présent puisque les glissières latérales servant de guidage à l'extrémité avant de ce plateau sont constituées par les jambes avant d'appui 7 du socle, lesquelles sont obligatoirement convergentes l'une vers l'autre à l'avant pour permettre l'emboîtement de plusieurs chariots.

En conséquence lorsque le plateau mobile est dans sa position d'escamotage, son extrémité avant est légèrement comprimée sur elle-même de façon élastique. Bien entendu, cette compression disparait lorsque le plateau mobile est déployé en arrière dans sa position d'utilisation. En conséquence pour le retour ultérieur de ce plateau en position d'escamotage, il est nécessaire d'exercer volontairement une certaine poussée dans le sens F sur son bord arrière 20 afin de vaincre la légère résistance due à la convergence des deux glissières 7 l'une vers l'autre.

Dans ces conditions, le plateau mobile 5 se trouve ainsi maintenu de façon stable dans sa position de déploiement en arrière. Il est donc totalement exclu qu'il puisse se produire un retour intempestif de ce plateau en position d'escamotage sous l'effet d'un simple choc accidentel.

Cependant, la manoeuvre volontaire d'escamotage du plateau 5 ne soulève aucune difficulté. En effet, comme déjà indiqué il suffit d'exercer une poussée F sur le bord arrière de ce plateau. Du reste, à partir du moment où cette manoeuvre a été amorcée, l'inclinaison des glissières 7 vers le bas facilite le glissement du plateau jusque dans sa position d'escamotage. Il convient de noter que dans la position de déploiement du plateau 5 en arrière, les fils internes 23 des deux branches latérales 5a de celui-ci sont en contact, à l'endroit des points A et B, avec les côtés correspondants des brides de guidage 28. Ceci assure le maintien du plateau 5 dans une position correcte lors de son déploiement et ceci réalise un excellent guidage de ce plateau 5 lorsqu'il est ensuite repoussé vers l'avant. De plus, ceci évite tout risque de coincement de ce plateau dans le cas où la poussée en avant est exercée en oblique sur son bord arrière 20.

Il faut noter que si un chariot est restitué par son utilisateur en laissant son plateau mobile 5 en position de déploiement en arrière, le retour de ce plateau en position d'escamotage se trouve réalisé automatiquement lors de l'emboîtement d'un autre chariot à l'intérieur de la partie arrière du chariot considéré. En effet dans un tel cas l'extrémité avant de cet autre chariot vient faire pression sur le bord arrière 20 du plateau 5 du premier chariot en assurant ainsi son retour en position d'escamotage.

Or dans cette position ce plateau se trouve incliné comme représenté sur la figure 3. En conséquence, sa présence ne gêne en aucune façon l'emboîtement d'un autre chariot identique à l'intérieur de la partie arrière du chariot considéré.

Comme déjà mentionné, la structure du châssis du chariot selon l'invention se trouve simplifiée par le fait que les glissières latérales de guidage du plateau 5 sont constituées par des éléments inclinés 7 formant en même temps les jambes avant d'appui du chariot. Ceci a en plus l'avantage de réduire le prix de revient de l'ensemble.

Ainsi qu'il a déjà été indiqué, le présent chariot est destiné plus spécialement à être mis à la disposition de la clientèle des magasins de vente en libre-service afin que celle-ci puisse transporter un ou plusieurs objets volumineux, en plus des objets de faible encombrement placés de la façon habituelle à l'intérieur de la corbeille de transport. Ceci permet de transporter aisément des objets volumineux tels que des caisses ou cartons d'emballage contenant des bouteilles de bière ou autre boisson, ou bien encore d'autres emballages particulièrement encombrants.

## Revendications

1. Chariot, notamment chariot d'achat, comportant une corbeille de transport (1) fixée sur le châssis inférieur (4) de ce chariot et disposée à une certaine hauteur au-dessus du niveau des roues (2, 3), ainsi qu'un plateau (5) destiné à servir de support à une caisse (6) ou autre objet volumineux, et qui est monté mobile entre une position inclinée d'escamotage sous la corbeille (1) et une position horizontale d'utilisation en arrière de celle-ci, ce plateau (5) étant guidé par deux glissières latérales constituées par deux éléments (7) inclinés vers le bas en direction de l'avant, ces deux éléments (7) consistant chacun en deux fils métalliques parallèles (8, 9) superposés dans un même plan vertical, cependant qu'en position de déploiement vers l'arrière le plateau (5) est soutenu par un élément de soutien (26) situé en arrière de l'extrémité supérieure des glissières latérales de guidage (7), caractérisé en ce que :
- les glissières latérales (7) de guidage du plateau mobile (5) forment en même temps les jambes avant d'appui du châssis inférieur (4), les éléments constituant ces glissières (7) partant de la partie arrière du fond de la corbeille (1) pour se terminer à l'extrémité avant du châssis, en présentant un écart plus faible à l'avant qu'à l'arrière ;
- le plateau mobile (5) comporte une structure plate en U dont l'ouverture est tournée vers l'avant et qui est réalisée en fils métalliques élastiques de sorte que dans sa partie avant cette structure possède une possibilité de déformation élastique dans le sens transversal, par rapprochement ou écartement de ses branches latérales ;
- à chacun de ses coins avant ce plateau (5) porte un organe saillant par exemple un crochet (25), engagé à coulissement dans la glissière latérale correspondante (7) de guidage , cependant que l'extrémité arrière de ce plateau est montée coulissante sur l'élément de soutien (26) prévu à l'arrière.

2. Chariot selon la revendication 1, caractérisé en ce que les branches latérales (5a) du plateau mobile (5) sont constituées chacune par des fils métalliques parallèles, et l'élément de soutien (26) prévu à l'arrière comporte deux parties en U (28), formant des brides de guidage disposées verticalement, et à l'intérieur de chacune desquelles est montée à coulissement l'une des branches latérales (5a) du plateau mobile (5).

3. Chariot selon la revendication 2, caractérisé en ce que chacune des branches latérales (5a) du plateau (5) comporte un fil métallique (23) disposé du côté interne, et qui, en position de déploiement de ce plateau en arrière, est en contact (en A ou B) avec le côté correspondant de la bride de guidage respective (28).

4. Chariot selon l'une des revendications précédentes, caractérisé en ce que dans sa partie arrière le châssis inférieur (4) est constitué par deux jambes d'appui (12) inclinées en sens inverse des jambes avant d'appui (7) et qui sont formées par les branches latérales de deux ou trois arceaux (13, 14, 15) en fil métallique dont les branches médianes sont solidarisées avec les extrémités supérieures des jambes avant d'appui (7), certaines d'entre elles au moins étant engagées entre les deux fils parallèles (8, 9) formant les jambes avant d'appui.

5. Chariot selon la revendication 4, caractérisé en ce que la branche médiane (18) de l'un des arceaux, formant les jambes arrière d'appui (12) du châssis (4), constitue une butée à l'extrémité supérieure des glissières latérales (7) de façon à arrêter le plateau mobile (5) dans une position telle qu'il se trouve déployée à l'horizontale à l'arrière du chariot.

## Claims

1. A trolley, particularly a shopping trolley, comprising a transport basket (1) fixed onto the bottom frame (4) of the trolley and placed at a certain height above the level of the wheels (2, 3), as well as a tray (5) intended for serving as a support for a box (6) or other bulky item, this tray being movable between a slanted retracted position under the basket (1) and a horizontal position of use beyond the rear end of the basket, this tray (5) being guided by two lateral slides constituted by two elements (7) inclined downwards towards the front, each of these two elements consisting in two parallel metal wires (8, 9) superposed in one same vertical plane, while the tray (5) is supported in its rearwardly extended position by a supporting element (26) located rearwardly of the upper end of the lateral guiding slides (7),
**characterized** in that :
- the lateral slides (7) for guiding the movable tray (5) are at the same time forming the front supporting legs of the bottom frame (4), the elements forming these slides (7) starting from the rear portion of the bottom of the basket (1) and ending at the front end of the frame, while these elements present a smaller spacing at the front than at the rear;
- the movable tray (5) comprises a flat U-shaped structure, the opening of which is turned towards the front and which is made of resilient metal wires, so that this structure has in its front portion a possibility of resilient deformation in the transverse direction, bringing its lateral limbs closer to each other or spreading them apart;
- the tray (5) carries on each of its front corners a salient member such as a hook (25) slidably engaged into the corresponding lateral guiding slide (7), while the rear end of the tray is slidably mounted on the supporting element (26) provided at the rear.

2. A trolley according to Claim 1, characterized in that the lateral limbs (5a) of the movable tray (5) are each constituted by parallel metal wires, and the supporting element (26) provided at the rear comprises two U-shaped portions (28) forming vertically arranged guiding straps, inside each one of which one of the lateral limbs (5a) of the movable tray (5) is slidably mounted.

3. A trolley according to Claim 2, characterized in that each of the lateral limbs (5a) of the tray (5) comprises a metal wire (23) disposed on the internal side, this wire contacting (in A or B) the corresponding side of the respective guiding strap (28) when the tray is in its rearwardly extended position.

4. A trolley according to one of the preceding Claims, characterized in that the bottom frame (4) is constituted in its rear portion by two supporting legs (12) inclined in a direction opposite to the direction of the front supporting legs (7) and which are formed by the lateral limbs of two or three arcuate members (13, 14, 15) made of metal wire, the median limbs of which are bounded up with the upper ends of the front support legs (7), at least some of said median limbs being engaged between the two parallel wires (8, 9) forming the front support legs.

5. A trolley according to Claim 4, Characterized in that the median limb (18) of one of the arcuate members forming the rear support legs (12) of the frame (4) constitutes a stop at the upper end of the lateral slides (7) so as to stop the movable tray (5) in a position such that this tray (5) will then be extended horizontally at the rear of the trolley.

## Patentansprüche

1. Wagen, insbesondere Einkaufswagen, mit einem Transportkorb (1), der auf einem Untergestell (4) des Wagens befestigt und in einer gewissen Höhe über dem Niveau der Räder (2, 3) angeordnet ist, und mit einer Plattform (5) als Aufnahme für eine Kiste (6) oder einen anderen voluminösen Gegenstand, die zwischen einer geneigten, unter den Transportkorb (1) eingeschobenen Stellung und einer nach hinten ausgezogenen horizontalen Gebrauchsstellung beweglich angeordnet ist, wobei die Plattform (5) in zwei Seitenführungen geführt ist, die von zwei nach vorn und unten geneigten Elementen (7) gebildet sind, die jeweils aus zwei parallelen übereinander in der gleichen vertikalen Ebene angeordneten Metalldrähten (8, 9) bestehen, während die Plattform (5) in der nach hinten ausgezogenen Stellung auf einem Auflagerelement (26) abgestützt ist, das hinter den oberen Enden der seitlichen Gleitführungen (7) angeordnet ist, dadurch gekennzeichnet, daß
- die seitlichen Gleitführungen (7) der beweglichen Plattform (5) zugleich die vorderen Stützbeine des Untergestells (4) bilden, wobei die die Gleitführungen (7) bildenden Elemente ausgehend von dem hinteren Bereich des Bodens des Transportkorbes (1) am vorderen Ende des Untergestells enden und vorn einen im Vergleich zu hinten geringeren Abstand voneinander aufweisen,
- die bewegliche Plattform (5) flache U-förmige Gestalt aufweist, deren Öffnung nach vorn gekehrt ist und die aus solchen elastischen Metalldrähten besteht, daß im vorderen Bereich ein elastisches Ausweichen in Querrichtung unter Annäherung oder Entfernen der Seitenteile zueinander ermöglicht ist,
- die Plattform (5) an jeder vorderen Ecke einen vorstehenden Fortsatz, beispielsweise einen Haken (25), aufweist, der gleitend in die jeweilige seitliche Gleitführung (7) eingreift, während der hintere Bereich der Plattform gleitend auf dem hinten angeordneten Auflagerelement (26) abgestützt ist.

2. Wagen nach Anspruch 1, dadurch gekennzeichnet, daß die Seitenteile (5a) der beweglichen Plattform (5) jeweils aus parallelen Metalldrähten bestehen und daß das hinten vorgesehene Auflagerelement (26) zwei U-förmige Bereiche (28) aufweist, die vertikal angeordnete Führungsbügel bilden und in deren Innenraum jeweils ein Seitenteil (5a) der beweglichen Plattform (5) gleitend geführt ist.

3. Wagen nach Anspruch 2, dadurch gekennzeichnet, daß jedes Seitenteil (5a) der Plattform (5) einen Metalldraht (23) aufweist, der auf der Innenseite angeordnet ist und in der nach hinten ausgezogenen Stellung der Plattform (bei A oder B) mit der betreffenden Seite des jeweiligen Führungsbügels (28) in Kontakt kommt.

4. Wagen nach einem der vorangehenden Ansprüche, dadurch gekennzeichnet, daß das Untergestell (4) in seinem hinteren Bereich zwei Stützbeine (12) aufweist, die gegenläufig zu den vorderen Stützbeinen (7) geneigt und von den Seitenteilen von zwei oder drei Bogen (13, 14, 15) aus Metalldraht gebildet sind, deren Mittelbereiche fest mit den oberen Enden der vorderen Stützbeine (7) verbunden sind, wobei mindestens einige davon sich zwischen den zwei parallelen Metalldrähten (8, 9), die die vorderen Stützbeine (7) bilden, erstrecken.

5. Wagen nach Anspruch 4, dadurch gekennzeichnet, daß der Mittelbereich (18) eines Bogens der hinteren Stützbeine (12) des Untergestells (4) einen Anschlag der oberen Enden der Seitenführungen (7) für die bewegliche Plattform (5) in der horizontal nach hinten ausgezogenen Stellung bildet.
